# EUROPÄISCHE PATENTANMELDUNG

(11) **EP 1 612 652 A1**
(43) Veröffentlichungstag der Anmeldung: **04.01.2006**
(21) Anmeldenummer: 04015409.8
(22) Anmeldetag: 30.06.2004
(51) Int. Cl.: G06F 3/033

(54) **Grafische Benutzeroberfläche mit durchsuchbaren Registern**

(71) Anmelder: SIEMENS AKTIENGESELLSCHAFT, 80333 München (DE)
(72) Erfinder: Weinländer, Markus, 91230 Happurg (DE); Windl, Helmut, 93077 Peisig (DE)

(57) **Zusammenfassung**

Die Erfindung betrifft eine Vorrichtung zur Anzeige von Informationen, Daten und/oder Eingabeelementen auf einer Oberfläche (4), insbesondere auf einem Bildschirm, mit mindestens einem Register (1) zur Anzeige einer Teilmenge der Informationen, Daten und/oder Eingabeelemente, wobei das mindestens eine Register einen auswählbaren, sensitiven Bereich auf der Oberfläche aufweist und mit Mitteln zum Einblenden des Inhalts (2) des mindestens einen Registers (1) bei Auswahl des sensitiven Bereichs (11) des Registers (1).

## Beschreibung

Die Erfindung betrifft eine Vorrichtung zur Anzeige von Informationen, Daten und/oder Eingabeelementen auf einer Oberfläche sowie ein entsprechendes Verfahren.

Die Leistungsfähigkeit moderner Software-Applikationen hat in den letzten 20 Jahren erheblich zugenommen. Eine große Anzahl von Funktionen steht dem Anwender zur Verfügung. Gleichzeitig hat sich die Datenmenge, mit der innerhalb einer Software-Applikation umgegangen wird, erhöht bzw. sie ist höher strukturiert. Dies führt zu einer zunehmenden Komplexität von Benutzerschnittstellen (User Interfaces). Auf der anderen Seite hat sich jedoch die typischerweise verfügbare Bildschirmauflösung seit 1990 gerade mal verdoppelt. Es gilt also, eine höhere Funktions- und Datendichte auf dem nur geringen Platz, den ein Bildschirm bietet, unterzubringen.

Eine Möglichkeit, um verschiedene Daten oder Strukturieren dem Benutzer anzubieten, ist die Verwendung von sogenannten Registern. Hier werden auf einer Oberfläche eines Bildschirmes mehrere Fenster so dargestellt, als würden sie so übereinanderliegen, dass nur jeweils ein Reiter bzw. die Überschrift des entsprechenden Registers zu sehen ist. Indem der Benutzer den Mouse-Zeiger auf ein solches Register bewegt und daraufklickt, wird das gewählte Register in den Vordergrund gebracht. Der Benutzer kann dann auf den Inhalt dieses Registers zugreifen. Das gewählte Register überdeckt aber das bisherige Register, so dass, wenn der Benutzer dies wünscht, dieses ursprüngliche Register erst mit einem erneuten Mouse-Klick in den Vordergrund gebracht werden muss.

Die beschriebene Register-Technik wird in nahezu allen Bereichen einer Benutzer-Schnittstelle eingesetzt. Beispielsweise bei Eingabedialogen, zur Umschaltung von verschiedenen Arbeitsbereichen oder zur Gliederung von Navigationsbereichen.

Durch die notwendige Umschaltung mittels des Mouse-Klicks ergeben sich jedoch Nachteile:
Usability-Tests haben gezeigt, dass Benutzer, wenn sie bestimmte Informationen suchen, ohne deren genaue Position auf dem Bildschirm zu kennen, nach dem gesuchten Element browsen. Sie klicken aber nicht darauf, da durch den Klick ja eine Aktion ausgelöst werden könnte, die der Benutzer nicht wünscht. Der Benutzer möchte die Oberfläche ja nur nach Informationen durchsuchen. Durch den Klick wird jedoch der angezeigte Bildschirm-Inhalt dauerhaft umgeschaltet. Wenn der Benutzer nur für kurze Zeit - d.h. für eine einzelne Aktion oder zum Aufnehmen einer einzelnen Information - ein anderes Register einsehen möchte, muss er anschließend auf das bisherige Register wieder aktiv zurückschalten, d.h. durch einen Mouse-Klick. Hierbei kann bei der Umschaltung zwischen den Registern für den Benutzer leicht der Überblick über die den Registern zugehörigen Informationen verloren gehen.

Die Aufgabe der vorliegenden Erfindung besteht daher darin, eine Vorrichtung und ein Verfahren anzugeben, welche das Wechseln zwischen verschiedenen Registern zur Anzeige von Informationen auf einfache Weise ermöglichen.

Die Aufgabe wird gelöst durch eine Vorrichtung zur Anzeige von Informationen, Daten und/oder Eingabeelementen auf einer Oberfläche, insbesondere auf einem Bildschirm, mit mindestens einem Register zur Anzeige einer Teilmenge der Informationen, Daten und/oder Eingabeelemente, wobei das mindestens eine Register einen auswählbaren, sensitiven Bereich auf der Oberfläche aufweist und mit Mitteln zum Einblenden des Inhalts des mindestens einen Registers bei Auswahl des sensitiven Bereichs des Registers.

Die Erfindung wird weiterhin gelöst durch ein Verfahren zur Anzeige von Informationen, Daten und/oder Eingabeelementen auf einer Oberfläche, insbesondere auf einem Bildschirm, bei dem eine Teilmenge der Informationen, Daten und/oder Eingabeelemente in einem Register angezeigt wird und der Inhalt des mindestens einen Registers bei Auswahl eines sensitiven Bereichs des Registers eingeblendet wird.

Der Erfindung liegt die Erkenntnis zugrunde, dass Informationen, welche aufgrund der Datenmenge und der Datenstruktur so aufwendig sind, dass sie auf mehrere Register verteilt werden müssen, einem Benutzer auf einfache Weise zur Anzeige gebracht werden können, wenn die Register bei Auswahl durch den Benutzer in Bezug auf ihren Inhalt aufgeblendet werden, d.h., wenn Hover-Register verwendet werden. Hierbei braucht der Benutzer lediglich den sensitiven Bereich eines Registers auszuwählen und der Inhalt des entsprechenden Registers wird aufgeblendet. Das Register bleibt solange aufgeblendet, wie der Benutzer mit Hilfe von Auswahlelementen in dem sensitiven Bereich auf der Oberfläche bleibt. Verlässt der Benutzer mit den Auswahlmitteln den entsprechenden sensitiven Bereich, so wird das ursprüngliche Register, welches vor dem Aufblenden des zweiten Registers angezeigt wurde, wieder angezeigt.

Hierdurch wird dem Benutzer die Möglichkeit gegeben, die Informationen sich lediglich anzeigen zu lassen, ohne dass das ursprüngliche Register, in dem der Benutzer aktiv tätig werden kann und Eingaben vornehmen kann bzw. Elemente auswählen kann, deaktiviert wird. Der Benutzer behält somit jederzeit den Überblick, in welchem Register er gerade aktiv ist.

Die Möglichkeit der Suche nach Informationen ohne das Wechseln des aktiven Registers wird dem Benutzer hierbei gegeben.

Eine weitere vorteilhafte Ausbildung der Erfindung ist dadurch gekennzeichnet, dass ein Auswahlelement zum Auswählen des mindestens einen anzuzeigenden Registers vorgesehen ist, wobei das Auswahlelement durch einen Benutzer der Vorrichtung über die Oberfläche bewegbar ist. Hierbei kann das Auswahlelement, beispielsweise ein Cursor sein, der mit Hilfe einer Mouse über den Bildschirm bewegt wird und bei Überfahren des sensitiven Bereichs, beispielsweise einer Lasche des Registers, wird das entsprechende Register aufgeblendet. Es kann sich bei dem Auswahlelement jedoch auch um einen Cursor handeln, der quasi mit Hilfe eines Fingers eines Benutzers auf dem Bildschirm aktiviert wird, in dem beispielsweise auf einem Touchscreen durch den Benutzer an einer entsprechenden sensitiven Stelle des Registers mit dem Finger eine Aktion ausgelöst wird. Wichtig ist, dass bei Überfahren bzw. Drücken des entsprechenden sensitiven Bereiches das gewünschte Register zwar aufgeblendet wird, jedoch nicht sofort aktiviert wird. Verlässt somit das Auswahlelement den sensitiven Bereich des entsprechenden Registers wieder, so wird das ursprüngliche Register entsprechend angezeigt. Das ausgewählte Register wird somit zwar aufgeblendet, aber nicht aktiviert.

Eine weitere vorteilhafte Ausbildung der Erfindung ist dadurch gekennzeichnet, dass die Mittel zum Einblenden derart ausgestaltet sind, dass der Inhalt des eingeblendeten Registers eingeblendet bleibt, solange das Auswahlelement innerhalb der Oberfläche des eingeblendeten Registers positioniert ist. Vorteilhaft ist hierbei, dass der Benutzer beispielsweise mit dem Auswahlelement auf dem Bereich, welcher über das ausgewählte Register eingeblendet ist, beispielsweise mit den Auswahlmitteln hin- und herfahren kann und so auf bestimmte Informationen zeigen kann. Solange der Benutzer mit dem Auswahlelement innerhalb des Umfanges des aufgeblendeten Registers navigiert, bleibt das entsprechende Register aufgeblendet. Verlässt der Benutzer mit dem Auswahlelement, also beispielsweise den Mouse-Zeiger oder seinem Finger den Darstellungsbereich des entsprechenden Registers, so wird das Register wieder ausgeblendet.

Wenn das Register ausgeblendet ist, kann entweder das ursprüngliche Register mitsamt seinem Inhalt in voller Größe wieder angezeigt werden, oder es kann auch ausschließlich eine Registerleiste, d.h. die einzelnen Laschen der auszuwählenden bzw. auswählbaren Register angezeigt werden, wenn ansonsten lieber ein größerer Arbeitsbereich zur Verfügung stehen soll.

Eine weitere vorteilhafte Ausbildung ist dadurch gekennzeichnet, das Mittel zur Aktivierung mindestens eines Registers vorgesehen sind. Vorteilhaft ist hierbei, dass, wenn beispielsweise nur eine Reiterleiste der entsprechenden zur Verfügung stehenden Register am Rande des Bildschirms angezeigt wird, mittels des Auswahlelementes eines der Register aktiviert werden kann, in dem der Benutzer auf den sensitiven Bereich des entsprechenden Registers klickt. Hierbei wird im Gegensatz zum Drüberfahren über den sensitiven Bereich dann das entsprechende Register aktiv und Eingaben durch den Benutzer können getätigt werden.

Eine weitere vorteilhafte Ausbildung der Erfindung ist dadurch gekennzeichnet, dass die Mittel zum Aktivieren des mindestens einen Registers derart ausgebildet sind, dass ein aktiviertes Register aktiv wird, wenn ein ausgewähltes weiteres Register eingeblendet wird.

Hierbei ist vor allem vorteilhaft, dass ein Benutzer nicht das von ihm aktivierte Register verlassen muss, wenn er in weiteren Registern nach Informationen sucht. Das einmal aktivierte, in dem der Benutzer unter Umständen arbeiten möchte und in dem er Eingaben tätigen möchte, bleibt aktiv, auch wenn andere Register zur Informationssuche zwischendurch eingeblendet werden. Ist ein Registerwechsel bezüglich der Aktivität gewünscht, so muss der Benutzer statt einfach auf den sensitiven Bereich eines anderen Registers mit dem Auswahlelement zu fahren, und so die Information einzublenden, dort vielmehr aktiv auf den sensitiven Bereich klicken, so dass das dann ausgewählte Register aktiv wird.

Im Folgenden wird die Erfindung anhand der in den Figuren dargestellten Ausführungsbeispielen näher beschrieben und erläutert.

Es zeigen:
- FIG 1: eine Oberfläche mit auswählbaren Registern,
- FIG 2: eine Oberfläche mit einem eingeblendeten Register und einem aktiven Register,
- FIG 3: eine Oberfläche mit einer Registerleiste,
- FIG 4: eine Oberfläche mit einem eingeblendeten Register.

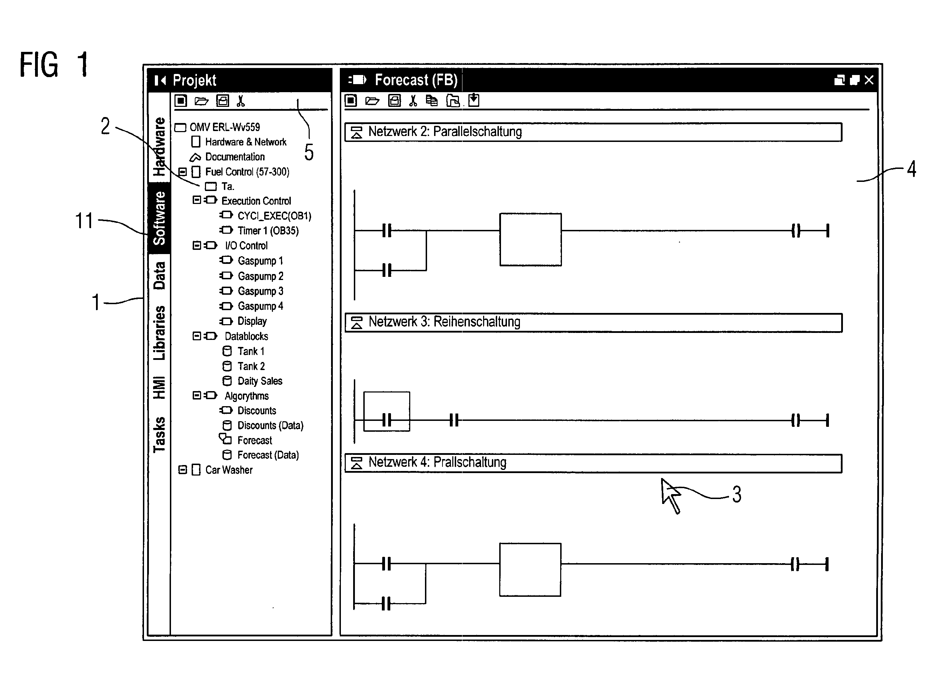

FIG 1 zeigt eine Ausführungsform der Erfindung am Beispiel einer fiktiven Engeeniering-Applikation. Die Applikation besteht aus einem Arbeitsbereich bzw. einer Oberfläche 4 und einem Navigationsbereich bzw. einem Bereich, in dem Informationen, Daten oder Eingabeelemente in Form eines Inhalts eines Registers angezeigt werden. Der Navigationsbereich ist aufgrund seiner Datenmenge und -struktur so aufwendig, dass er in mehreren Registern 1 dargeboten wird. Im gezeigten Beispiel sind die Register "Hardware", "Software", "Daten", "Libraries", "HMI" und "Tasks" angeboten. Im Beispiel ist das Register "Software" aktiv. Die Register 1 verfügen über Laschen, welche als sogenannte sensitive Bereiche 11 ausgebildet sind. In den eingeblendeten Registern (sogenannte Hover-Register) wird der Inhalt 2 des jeweiligen Registers auf einer dem Register zugeordneten Oberfläche 5 dargestellt. Das eingeblendete Register "Software" unterscheidet sich im statischen Zustand, wenn beispielsweise die Mouse bzw. der Finger eines Nutzers als Auswahlelement 3 sich außerhalb des Registers befindet, nicht von einem gewohnten Register. Das Register "Software" ist aktiv und der Inhalt 2 des Registers 1 wird dem Benutzer angezeigt.

Der Unterschied zu einem gewohnten Register ergibt sich nun aus der Interaktion des Benutzers mit den Registern 1. Sobald das Auswahlelement 3 bzw. der Mouse-Zeiger oder der Finger eines Benutzers über ein Register 1 bzw. den sensitiven Bereich 11 eines Registers bewegt wird, zeigt die Vorrichtung sofort - d.h. ohne Mouse-Klick - den Inhalt 2 des entsprechenden Registers an.

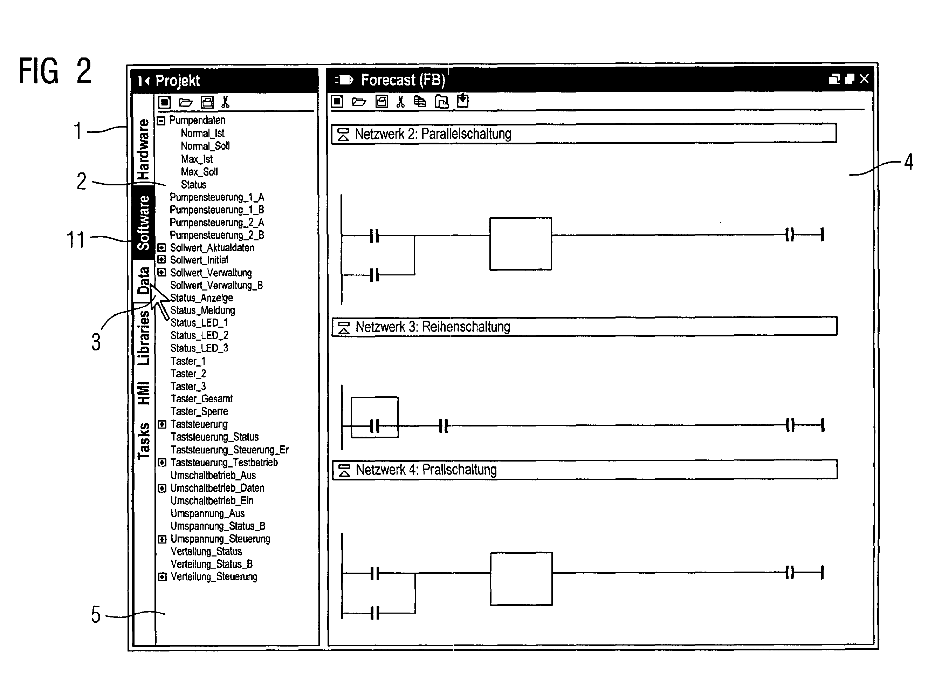

In FIG 2 wurde beispielsweise dem als Mouse-Zeiger ausgebildeten Auswahlelement auf den sensitiven Bereich 11 des Registers 2 mit dem Namen "Data" gefahren. Hierdurch wird das entsprechende Register 1 aufgeblendet und der Inhalt 2 des Registers angezeigt. Das aktive Register bleibt jedoch weiterhin das Register mit dem Namen "Software". Dem Benutzer wird der Inhalt des Registers "Data" also nur dargestellt. Möchte er in dem Register arbeiten, so muss er es mittels des Auswahlelements 3 aktivieren.

So lange das Auswahlelement 3 bzw. der Mouse-Zeiger oder der Finger des Benutzers auf der Oberfläche 5 bzw. dem Navigationsbereich des eingeblendeten Registers bleibt, wird der Inhalt des Registers angezeigt und der Benutzer kann die Informationen lesen oder auch Elemente bearbeiten. Bewegt der Benutzer den Mouse-Zeiger auf ein weiteres Register (z.B. Libraries) so würde dieses anstatt des Registers "Data" in den Vordergrund gestellt und die Information würde entsprechend angezeigt werden im Navigationsbereich bzw. auf der dem Register zugehörigen Oberfläche 5. Bewegt der Benutzer den Mouse-Zeiger bzw. seinen Finger dagegen in einen ganz anderen Bereich des Bildschirms, beispielsweise den Arbeitsbereich 4 der Oberfläche, so wird das bisher aktive Register "Software" wieder angezeigt. Damit der Benutzer das eingeblendete Register (Hover-Register) dauerhaft in den Vordergrund bringen kann, ist ein Mouse-Klick auf das entsprechende Register erforderlich bzw. eine Aktion mit dem Finger.

Hierdurch kann der Benutzer den Inhalt der Register browsen, in dem er das Auswahlelement bzw. den Mouse-Zeiger oder den Finger über die Registerlaschen bewegt und dabei von einem zum nächsten Register fährt. In einem eingeblendeten Register, einem sogenannten Hover-Register kann er einmalig arbeiten, ohne eine dauerhafte Umschaltung des Registers auszulösen. Sobald das Hover-Register verlassen wird, schaltet sich wieder das ursprüngliche aktive Fenster in den Vordergrund.

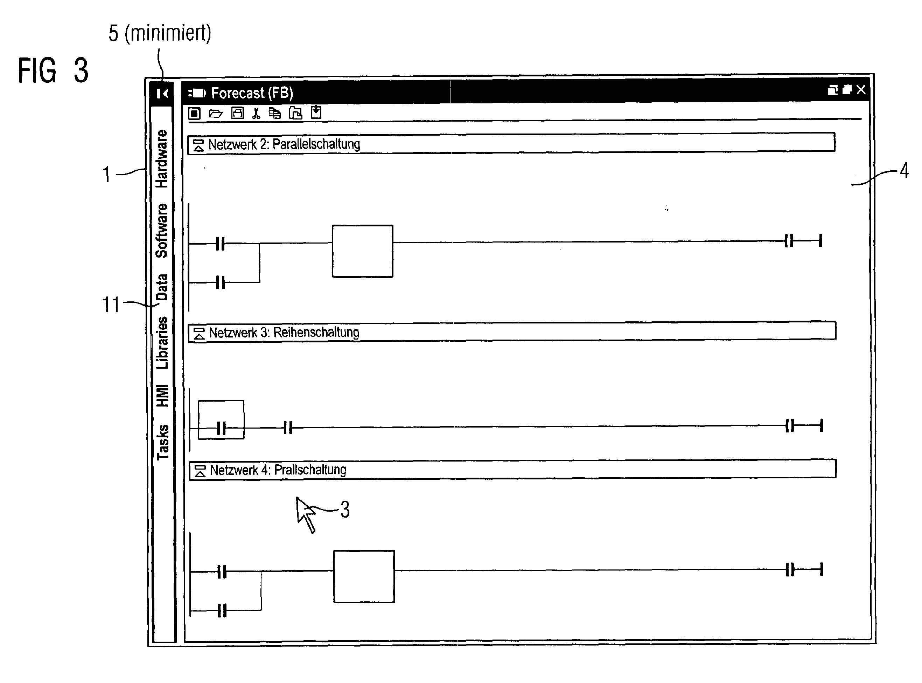

Eine Variante der erfindungsgemäßen Vorrichtung ist in Abb. 3 dargestellt. Hierbei ist die Erfindung eingesetzt, um den für die Arbeitsfläche zur Verfügung stehenden Bildschirmbereich zu maximieren. Hierbei wird der Navigationsbereich bzw. die Oberfläche 5, welche den Inhalt der Register anzeigt, derart verkleinert (minimiert) dargestellt, dass lediglich die Laschen 11 der Register 1 sichtbar bleiben. Damit steht für den Benutzer die gesamte Bildschirmbreite als Arbeitsbereich zur Verfügung.

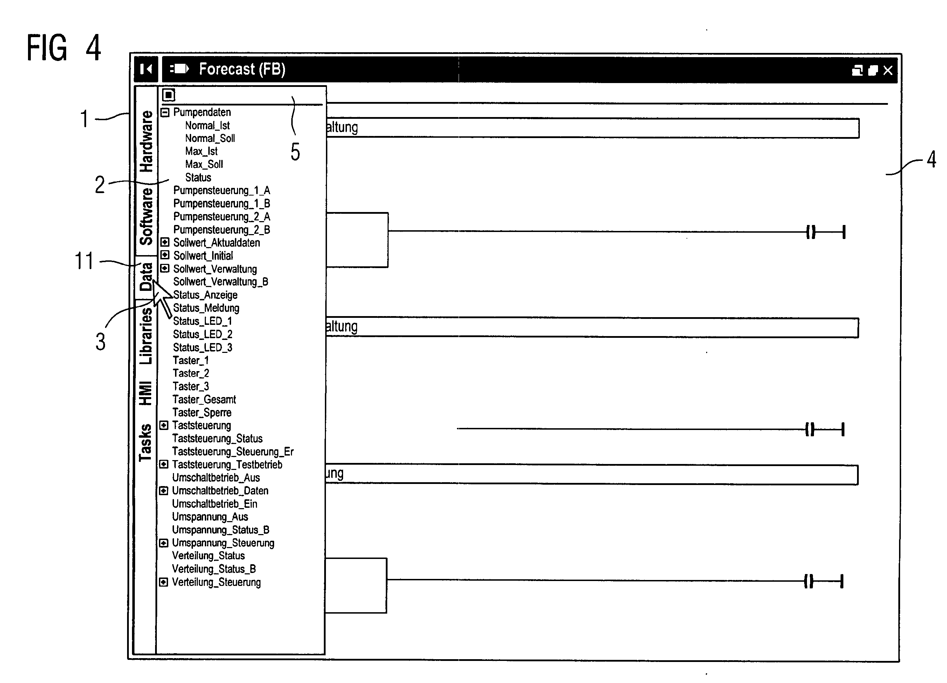

Entsprechend des geschilderten Verfahrens kann auch hier der Benutzer schnell auf den Inhalt 2 der Register 1 im Navigationsbereich 5 zugreifen. Sobald das Auswahlelement 3 bzw. der Mouse-Zeiger über eine Registerlasche, den sensitiven Bereich 11 eines Registers 1 bewegt wird, wird der Inhalt 2 des entsprechenden Registers im Vordergrund dargestellt. Dabei wird jedoch der Arbeitsbereich teilweise überdeckt (Abb. 4). Bewegt der Benutzer das Auswahlelement 3 bzw. den Mouse-Zeiger der den Finger anschließend auf ein anderes Register 1, so erscheint dieses im Vordergrund. Bewegt der Benutzer das Auswahlelement 3 bzw. den Mouse-Zeiger oder Finger hingegen wieder auf die Arbeitsfläche 4, so verschwindet das eingeblendete Hover-Register wieder. Schließlich kann der Benutzer auch auf das Hover-Register klicken. In diesem Fall erscheint der Navigationsbereich 5, in dem der Inhalt 2 des Registers 1 dargestellt wird, wieder permanent auf dem Bildschirm.

Die beschriebene Erfindung kann außer in dem dargestellten Beispiel eines Engeneering-Systems auch in beliebigen anderen Software-Applikationen, beispielsweise Word, andere Textverarbeitungssysteme, Tabellen-Kalkulationssysteme, Grafik-Anwendungen sowie Präsentations-Applikationen verwendet werden.

## Patentansprüche

1. Vorrichtung zur Anzeige von Informationen, Daten und/oder Eingabeelementen auf einer Oberfläche (4), insbesondere auf einem Bildschirm,
- mit mindestens einem Register (1) zur Anzeige einer Teilmenge der Informationen, Daten und/oder Eingabeelemente, wobei das mindestens eine Register einen auswählbaren, sensitiven Bereich auf der Oberfläche aufweist und
- mit Mitteln zum Einblenden des Inhalts (2) des mindestens einen Registers (1) bei Auswahl des sensitiven Bereichs (11) des Registers (1).

2. Vorrichtung nach Anspruch 1,
**dadurch gekennzeichnet,**
**dass** ein Auswahlelement (3) zum Auswählen des mindestens einen anzuzeigenden Registers (1) vorgesehen ist, wobei das Auswahlelement (3) durch einen Benutzer der Vorrichtung über die Oberfläche (4) bewegbar ist.

3. Vorrichtung nach Anspruch 1 oder 2,
**dadurch gekennzeichnet,**
**dass** die Mittel zum Einblenden derart ausgestaltet sind, dass der Inhalt (2) des eingeblendeten Registers (1) eingeblendet bleibt, solange das Auswahlelement (3) innerhalb der Oberfläche (5) des eingeblendeten Registers (1) positioniert ist.

4. Vorrichtung nach einem der vorhergehenden Ansprüche,
**dadurch gekennzeichnet,**
**dass** Mittel zur Aktivierung mindestens eines Registers (1) vorgesehen sind.

5. Vorrichtung nach einem der vorhergehenden Ansprüche,
**dadurch gekennzeichnet,**
**dass** die Mittel zum Aktivieren des mindestens einen Registers (1) derart ausgebildet sind, dass ein aktiviertes Register (1) aktiv bleibt, wenn ein ausgewähltes weiteres Register (1) eingeblendet wird.

6. Verfahren zur Anzeige von Informationen, Daten und/oder Eingabeelementen auf einer Oberfläche (4), insbesondere auf einem Bildschirm, bei dem
- eine Teilmenge der Informationen, Daten und/oder Eingabeelemente in einem Register (1) angezeigt wird und
- der Inhalt (2) des mindestens einen Registers (1) bei Auswahl eines sensitiven Bereichs (11) des Registers eingeblendet wird.

7. Verfahren nach Anspruch 6,
**dadurch gekennzeichnet,**
**dass** mindestens ein anzuzeigendes Register ausgewählt wird, wobei ein Auswahlelement (3) durch einen Benutzer der über die Oberfläche (4) bewegt wird.

8. Verfahren nach Anspruch 6 oder 7,
**dadurch gekennzeichnet,**
**dass** der Inhalt (2) des eingeblendeten Registers (1) eingeblendet bleibt, solange das Auswahlelement (3) innerhalb der Oberfläche (5) des eingeblendeten Registers (1) positioniert ist.

9. Verfahren nach einem der Ansprüche 6 bis 8,
**dadurch gekennzeichnet,**
**dass** mindestens ein Register (1) aktiviert ist.

10. Verfahren nach einem der Ansprüche 6 bi 9,
**dadurch gekennzeichnet,**
**dass** ein aktiviertes Register (1) aktiv bleibt, wenn ein ausgewähltes weiteres Register (1) eingeblendet wird.
